Europäisches Patentamt

European Patent Office

Office européen des brevets

(11) Numéro de publication: **0 422 309 A1**

## DEMANDE DE BREVET EUROPEEN

(21) Numéro de dépôt: 89420386.8

(22) Date de dépôt: **10.10.89**

(51) Int. Cl.⁵: **C21B 13/02**

(43) Date de publication de la demande:
**17.04.91 Bulletin 91/16**

(84) Etats contractants désignés:
**CH DE ES GB IT LI SE**

(71) Demandeur: **SARL FUSION ET VOLATILISATION**
**27 avenue Libération**
**F-42000 Saint Etienne(FR)**

(72) Inventeur: **Philipon, Paul**
**13 Rue de Gaulle**
**F-42000 St. Etienne(FR)**

(54) Four à cuve pour la réduction d'oxyde de fer par l'hydrogène en vue de la production de poudre de fer pour frittage.

(57) Par traitement d'agglomérés carbonés d'oxyde de fer dans un four à cuve à chauffage externe et à circulation méthodique de gaz essentiellement constitués d'hydrogène provenant des cokeries on obtient un taux de réduction particulièrement élevé permettant de produire une matière apte aux opérations de production de pièces par frittage .

# FOUR À CUVE POUR LA RÉDUCTION D'OXYDE DE FER PAR L'HYDROGÈNE EN VUE DE LA PRODUCTION DE POUDRE DE FER POUR FRITTAGE .

La production de pièces obtenues par frittage fait appel à une poudre métallique répondant à des caractéristiques physico-chimiques spéciales . En ce qui concerne l'analyse , la matière première utilisée doit-être d'une grande pureté , en ce qui concerne la granulométrie un conditionnement particulier doit-être effectué pour qu'après frittage les caractéristiques de densité et de résistance soient atteintes pour les pièces fabriquées .

La matière première la plus couramment utilisée pour produire cette poudre de fer est le minerai ayant subi une opération d'enrichissement maximum .

Pour ce faire on est conduit à le broyer très finement pour éliminer la gangue , il en résulte que l'on obtient une poudre d'oxyde de fer qui , pour être traitée dans les fours à cuve à recirculation gazeuse nécessite un conditionnement particulier .

Il en est de même pour certains sous produits de la sidérurgie qui présentent un haut degré de pureté et qui sont par conséquent susceptibles d'être utilisés .

Ces différents produits d'une grande finesse ne peuvent pas être traités tels quels dans un four à cuve à recirculation gazeuse sauf en fluidisation , mais dans notre cas pour permettre un passage de gaz régulier réparti dans la cuve , il faut les conditionner sous forme de boulets ou de pelettes de manière à obtenir un coefficient de vide compris entre 30 et 50% du volume de la cuve .

D'une manière générale on fait appel à un liant carboné pour produire ces agglomérés , le taux de liant variable suivant la granulométrie des produits utilisés est généralement compris entre 8 et 12% .

Dans notre brevet N° 2 575 813 nous revendiquions la production de poudre de fer pur par réduction d'oxydes chargés dans un four sous forme de boulets en mélange avec des morceaux de charbons et avec recirculation d'un gaz riche en hydrogène provenant du dégagement des matières volatiles contenues dans les charbons chargés avec les boulets à réduire . L'apport d'énergie nécessaire pour assurer le déroulement de l'opération étant effectué à travers des parois chauffantes .

Cette ensemble de dispositions présente certains inconvénients , dont le principal réside dans le fait que le soufre volatil contenu dans le charbon est susceptible de se fixer sur le fer , et que d'autre part , l'eau de constitution contenu dans les charbons augmente l'humidité du gaz .

Le procédé suivant l'invention diffère de celui précédemment décrit par le fait que si la réduction des agglomérés se produit toujours dans un four à cuve à chauffage externe , les gaz de réduction ne proviennent pas exclusivement des matières traitées avec les boulets mais essentiellement d'apports extérieures - ( cokeries par exemple ) , et que les éléments rajoutés à la charge à réduire ne servent qu'à empécher le collage des boulets entre eux les séparant sans apporter d'éléments nocifs pour le fer ( soufre volatil et vapeur d'eau ) .

Ces matériaux devront donc être constitués de matières carbonées préalablement dévolatilisées , d'une granulométrie voisine de celle des boulets à traiter ainsi qu'éventuellement d'un certain pourcentage de produits susceptibles de capturer le soufre pouvant être encore contenu dans le gaz de réduction injecté à la base du four ( chaux ou chaux dolomitique par exemple ) .

Le mélange boulets à réduire - éléments d'addition doit être environ de volume pour volume .

L'objectif du procédé visant l'obtention d'une matière pratiquement complètement réduite ne pourra être atteint que si les conditions thermodynamiques le permettent , c'est à dire qu'à la température de traitement le gaz réducteur contient un minimum de vapeur d'eau .

En présence d'hydrogène l'oxyde de fer se transforme sous l'effet de la réaction :

$$FeO + 2H = Fe + H^2O$$

Il y a donc formation fatale de vapeur d'eau qui va se mélanger à l'hydrogène non tranformé et ralentir la poursuite de l'opération de réduction .

Grace à la présence d'éléments carbonés dans la charge, cette vapeur d'eau va à son tour réagir , ou tout au moins partiellement sur le carbone suivant la réaction :

$$C + H2O = CO + H2$$

en redonnant un gaz par conséquent moins oxydé .

Compte tenu du niveau thermique auquel s'effectue l'opération ( entre 1000° et 1150° ) toute la vapeur d'eau ne sera peut-être pas décomposée mais une grande partie le sera .

Cette réaction secondaire sera par conséquent bénéfique pour l'opération de réduction du fer , sous réserve de pouvoir assurer dans le four l'apport d'énergie nécessaire pour contrebalancer l'endothermicité de cette réaction .

Pour que les conditions de réduction soient satisfaisantes nous avons vu qu'il était nécessaire de recycler un gaz le plus riche possible en hydrogène et pratiquement exempt d'éléments oxydés ( CO2 et H2O ) .

Dans l'hypothèse ou comme dans les fours ERIM on recycle les gaz à la base du four après leur avoir fait subir une opération d'épuration , on arrivera à obtenir une analyse des gaz de plus en plus riche en oxyde de carbone , ce qui n'est pas la meilleure solution pour obtenir une réduction facile .

L'application du procédé nécessitera par conséquent de se trouver à proximité d'une source d'hydrogène ( cokeries métallurgiques ou minières , fours de calcination d'anthracite etc .)

Le gaz épuré provenant de la cokerie ou des fours de dévolatilisation d'anthracite sera injecté à la base du four et le gaz ayant assuré l'opération de réduction dans le four enrichi en oxyde de carbone et en vapeur d'eau et amoindri en hydrogène sera utilisé en partie pour assurer le chauffage externe du four et l'éxcédent sera envoyé dans les circuits éxistants de traitement de gaz de la cokerie ou il sera mélangé à celui produit par les batteries de fours de cokefaction .

Grâce à ce mode opératoire les boulets de minerai seront en permanence traités par un gaz disposant d'un pouvoir réducteur maximum ce qui permettra d'atteindre un taux de réduction très élevé des oxydes de fer , compris entre 95 et 100% /

La réduction par le carbone de $Fe^2O^3$ a pour résultat par Kg de fer obtenu de consommer OKg321 de carbone , de produire $0,6 Nm^3$ de CO et de nécessiter 1 thermie .

La réduction par l'hydrogène de $Fe^2O^3$ a pour résultat de nécessiter $0,6 Nm3$ de $H^2$ , de produire $0,6 Nm^3$ de $H^2O$ et de consommer 0,2 thermie .

Si pour produire des boulets suffisament solides pour pouvoir être chargés dans le four sans formation de poussières on est conduit à utiliser 12% du liant à base essentiellement de brai de houille mélangé à du goudron , l'ensemble titrant 40% de C fixe et 60% de matières volatiles constituées de carbone volatiles et d'hydrogène , à partir du moment ou la température atteinte dans le four par la charge le permettra il se produira un début de réduction des oxydes de fer par le carbone avec production de fer et d'oxydes de carbone suivant la réaction :

$$FeO + C = Fe + CO$$

en même temps que les matières volatiles se dégageront sous forme gazeuse .

Dans le four à cuve ou se produira la réduction on peut distinguer trois parties principales en ce qui concerne les différentes réactions que subiront les agglomérés circulant de haut en bas de manière continue sous l'effet de la chaleur et de la circulation du gaz réducteur depuis le bas du four .

La zone médiane ou se produit l'apport thermique au travers des parois chauffées extérieurement assurant le maintien de la charge à la température voulue , c'est dans cette zone que se passe la majeure partie de la réduction sous l'effet de l'hydrogène .

La zone inférieure dans laquelle les boulets réduits se refroidissent progressivement en cédant leur chaleur sensible à l'hydrogène de circulation .

La zone supérieure fonctionnant elle aussi comme un échangeur dans lequel les gaz chauds ayant servi à la réduction cèdent leur chaleur sensible aux boulets venant d'être chargés .

Dans cette zone , comme nous l'avons décrit plus haut , une réduction partielle des oxydes de fer se produit par le carbone constituant le liant ayant servi à fabriquer les boulets suivant la réaction :

$$Fe2O^3 + 3C = 2Fe + 3CO$$

l'oxyde de carbone se dégageant contribue à donner aux boulets une structure poreuse favorable à l'opération ultérieure de réduction finale par l'hydrogène et facilitant les opérations ultérieures de broyage des boulets réduits récoltés .

A titre d'exemple non limitatif la composition des boulets pourra être la suivante :

Oxyde de Fer ($Fe2O^3$) 88% ; Liant 12%

Les éléments constitutifs seront par conséquent par Tonne de boulets traités :

Fer 880 $\times$ 0,7 = 616 Kg
Oxygène 880 $\times$ 0,3 = 264 Kg
C. Fixe 120 $\times$ 0,4 = 48 Kg
M. Voaltiles 120 $\times$ 0,6 = 72 Kg

La réduction par le carbone avec production de CO qui se produira dans la partie haute du four permettra d'obtenir :

$$\frac{48}{321} \times 1000 = 149,53 \ Kg \ de \ Fe$$

avec un dégagement de : 149,53 $\times$ 0,6 = 89,58 $Nm^3$ de CO moyennant un apport thermique extérieur de 149,53 thermies .

La réduction par l'hydrogène portera sur un poids de fer de 616 - 149,58 = 466,42 Kg , nécessitant par conséquent la consommation de :
466,42 $\times$ 0,6 = 279,85 $Nm3$ de $H^2$
et un apport thermique extérieur de :
466,42 $\times$ 0,2 = **93,28** thermies
la production de vapeur étant de 279,85 $Nm^3$

Sans prendre en compte la décomposition partielle de la vapeur d'eau , on obtiendra par conséquent 616 Kg de Fer moyennant la consommation de 48 Kg de C fixe et de 280 $Nm^3$ de $H^2$ en apportant au four hors pertes :
149,53 + 93,28 = 242,81 thermies .

Par contre le four produira par Tonne de boulets traités : 89,58 $Nm^3$ de CO plus le gaz provenant des matières volatiles dégagées par le liant à hauteur de 72 Kg .

Les boulets extraits à basse température devront être séparés par triage magnétique des autres matières constituant la charge .

Ils devront ensuite subir un broyage approprié pour obtenir une poudre à la granulométrie requise pour la production de pièces frittés sauf s'ils sont utilisés tel quel en ajout dans des fours électriques

Les matières carbonés chargées avec les boulets ou les pellettes d'oxydes de fer seront récupérées pour être rechargées - dans la mesure ou une partie pourra être gazeifiée on devra compléter la charge - cette dépense supplémentaire de carbone étant compensée par une production de gaz dans le four .

Le phénomène de réduction de l'oxyde de fer par l'hydrogène engendrera de la vapeur d'eau , celle ci en présence du carbone disposé dans la charge réagira plus ou moins suivant sa position dans le four correspondant à une température déterminée .

Plus on travaillera à une température élevée ( au dessus de 1150° par exemple ) et plus la réaction sera active .

Il se produira par conséquent deux réactions simultanées :

$Fe^2O^3 + 3H^2 = 2 Fe + 3 H^2O$      21,8 Kcal
$3H^2O + 3C = 3 H^2 + 3CO$      87,0 Kcal

qui se traduiront en fin de compte par le résultat suivant :

$Fe^2O^3 + 3C = 2 Fe + 3CO$      108,8 Kcal

Suivant la température à laquelle sera effectuée l'opération on aura dans les gaz une teneur en vapeur d'eau variable du fait qu'elle sera plus ou moins reformée et par conséquent une consommation d'hydrogène variant en proportion inverse de celle du carbone .

Dans tous les cas de fonctionnement mis à part le role joué par le carbone du liant l'agent réducteur effectif sera bien l'hydrogène mais son rôle sera plus ou moins masqué par le fait de la réaction secondaire de reformage .

Le rôle de l'hydrogène restera toutefois capital pour permettre la réduction complète et assurer la récupération de la chaleur sensible de la charge dans la partie basse du four .

Suivant que ce type de réduction sera plus ou moins complète on consommera plus ou moins d'hydrogène , et dans le cas le plus extrème uniquement du carbone fixe et pas d'hydrogène .

Il en résultera que l'ambiance gazeuse dans laquelle se trouveront les boulets à traiter sera particulièrement favorable à l'opération de réduction puisque l'élément oxydé produit , c'est à dire la vapeur d'eau sera immédiatement transformé en CO et $H^2$.

Grace à cette situation il pourra être possible de pousser le taux de réduction jusqu'à un point pouvant dispenser d'avoir à effectuer sur la poudre de fer l'opération ultérieure de traitement à l'hydrogène .

Le procédé pourra donc comporter deux types de marche

- A une température basse , c'est à dire inférieure à celle entrainant un collage des boulets entre eux fonctionnant avec peu ou pas d'éléments carbonés ajoutés à la charge .
- A une température élevée , c'est à dire la température maximum compatible avec une exploitation n'entrainant pas une déformation du boulet , utilisation d'une charge mixte : boulets éléments carbonés avec transformation de la vapeur d'eau produite en CO et $H^2$ au détriment du carbone de la charge

**Revendications**

Procédé de production de fer à partir d'oxyde par réduction dans un four à cuve

1°) Procédé caractérisé par le fait que le minerai fin est briquetté avec un liant carboné qui au moment du chauffage dans le four commence à assurer l'opération de réduction en faisant acquérir au boulet une structure poreuse .

2°) Procédé suivant revendication 1 caractérisé par le fait que le gaz de recyclage envoyé à la base du four est constitué essentiellement d'hydrogène et est injecté en quantité suffisante pour assurer le refroidissement des produits traités .

3°) Procédé suivant revendication 1 et 2 caractérisé par le fait que la charge est constituée d'un mélange de boulets de minerai et de produits carbonés en proportion telle que les boulets ne se touchent pas pour éviter leur collage entre eux .

La présence de carbone permettant de plus le reformage automatique d'une partie de la vapeur d'eau produite .

4°) Procédé suivant revendication 1 à 3 caractérisé par le fait que l'apport thermique nécessaire au déroulement de l'opération se fait à travers des cloisons conductrices , l'énergie étant fournie soit par l'électricité , soit par la combustion d'une partie du gaz provenant du four de réduction .

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1 433 326 (K. KUNESCH) <br> * Revendications 1-10; page 5, lignes 12-14; page 5, ligne 33; page 6, ligne 4; page 7, lignes 13-15; page 12, lignes 20-23 * | 3 | C 21 B 13/02 |
| A | US-A-3 776 533 (JOSEPH VLNATY) <br> * Colonne 2, lignes 41-62; colonne 5, lignes 16-23; colonne 6, ligne 25; colonne 7, lignes 1-7 * | 1,2,3 | |
| A | US-A-3 765 869 (UWE SCHIERLOCH) <br> * Revendication 1; colonne 4, lignes 4-27; colonne 5, lignes 1-34 * | 1 | |
| A | DE-A-1 508 001 (F. KRUPP) <br> * Revendication 1; page 3, alinéa 3 * | 1 | |
| A | FR-A-1 168 376 (NORSK HYDRO-ELEKTRISK KVAELSTOFAKTIELSKAB) <br> * Résumé; figure 2; page 3, colonne de droite, exemple 2 * | 2,4 | |
| A | US-A-2 508 515 (CARLE R. HAYWARD) <br> * Résumé; colonne 2, lignes 39-45; figure 1 * | 2,4 | DOMAINES TECHNIQUES RECHERCHES (Int. Cl.5) <br><br> C 21 B <br> C 22 B |
| A | FR-A-1 549 580 (TSENTRALNY NAUCHNO-ISSLEDOVATELSKY INSTITUT CHERNOI METALLURGII IM. I.P. BARDINA) <br> * Page 3, colonne de gauche, alinéa 3 * | 3 | |
| E | FR-A-2 629 837 (FUSION ET VOLATILISATION SARL) <br> * Revendications 1-4 * | 1-4 | |

Le présent rapport a été établi pour toutes les revendications

| Lieu de la recherche | Date d'achèvement de la recherche | Examinateur |
|---|---|---|
| LA HAYE | 11-06-1990 | ELSEN D.B.A. |